# EUROPEAN PATENT APPLICATION

(11) **EP 4 104 677 A1**
(43) Date of publication of application: **21.12.2022**
(21) Application number: 22163237.5
(22) Date of filing: 21.03.2022
(51) Int. Cl.: A01K 39/012

(54) **IMPROVED PERCH STRUCTURE FOR FEEDERS**

(30) Priority: 23.03.2021 US 202163164724 P
(71) Applicant: Brome Bird Care Inc., Knowlton, QC J0E 1V0 (CA)
(72) Inventor: COTE, Paul L., Québec J0E 1V0 (CA)
(74) Representative: Urizar Anasagasti, Jesus Maria

(57) **Abstract**

The present disclosure provides a bird feeder having a seed container, seed tray and perch structure connected to the seed tray. The perch structure is further comprised of a plurality of perch members and at least one radial member, the radial members extending between and connecting adjacent perch members. At least one of the perch members is comprised of an angled upper surface and a pair of sidewalls extending downwardly therefrom. At least one of the pair of sidewalls curls inwardly to provide strength and resilience to the perch structure.

## Description

### FIELD

The disclosure relates to the field of bird feeders, and more specifically to an improved perch structure with reinforced members.

### BACKGROUND

Perch structures have been used in bird feeders before. Specifically, US Patent Application No. 16/501,032 (Cote) describes a bird feeder having a perch structure, the perch structure further comprised of a plurality of circular elements and radial elements extending between and connecting adjacent circular elements. In Cote, these circular elements have a generally flat upper surface with two sidewalls extending downwardly in a somewhat U-shape.

Unfortunately, it is a problem in the art that this type of perch structure is fragile and prone to breaking if the bird feeder falls to the ground.

As such, there is a need for an improved bird feeder having a perch structure with stronger, more resilient circular and radial elements that can address and improve upon the shortcomings as outlined and described above.

### SUMMARY

In an aspect, the present disclosures provides a bird feeder comprising: a seed tube to receive and store seeds; a seed tray connected to the seed tube, the seed tray to dispense the seeds; and a perch structure secured to the seed tray, the perch structure further comprising: a plurality of perch members; and, at least one radial member extending between and connecting adjacent perch members; wherein at least one of the plurality of perch members has a curved wall to reinforce the at least one perch member.

In another aspect, the present disclosure provides a perch structure for use with a bird feeder comprising: a plurality of perch members; and, at least one radial member extending between and connecting adjacent perch members.

### BRIEF DESCRIPTION OF THE DRAWINGS

The following figures serve to illustrate various embodiments of features of the disclosure. These figures are illustrative and are not intended to be limiting.
Figure 1 is a perspective view of a bird feeder, according to an embodiment of the present disclosure;
Figure 2 is a perspective view of a perch structure of the bird feeder shown in Figure 1;
Figure 3 is a side view of the perch structure shown in Figure 2;
Figure 4 is a side cross-sectional view of the perch structure shown in Figure 2; and,
Figure 5 is an enlarged view of the perch structure taken along the stippled lines shown in Figure 4.

### DETAILED DESCRIPTION

The following embodiments are merely illustrative and are not intended to be limiting. It will be appreciated that various modifications and/or alterations to the embodiments described herein may be made without departing from the disclosure and any modifications and/or alterations are within the scope of the contemplated disclosure.

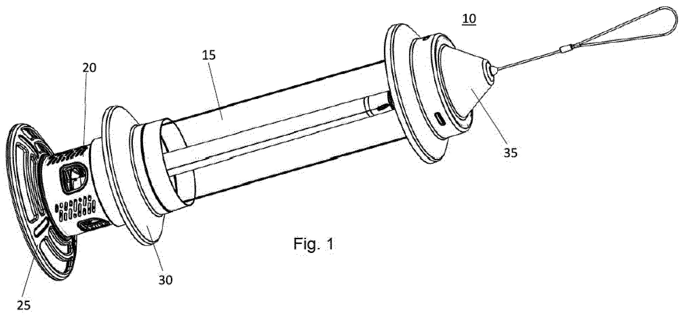

With reference to Figure 1 and according to an embodiment of the present disclosure, a bird feeder 10 is shown, the bird feeder 10 generally comprised of a seed tube 15, the seed tube 15 configured to receive and store seeds, a seed tray 20 connected to the seed tube 15, the seed tray 20 to dispense the seeds and a reinforced perch structure 25 secured to the seed tray 20. In this particular embodiment, the bird feeder 10 is further comprised of a shroud 30 and a cover 35. The perch structure 25 is configured to permit birds of different shapes and sizes to grasp onto and access the feed in the seed tray 20. A worker skilled in the art would appreciate that although a specific bird feeder 10 is shown in the present embodiment, any number of different bird feeders could be used, provided that they include the perch structure 25.

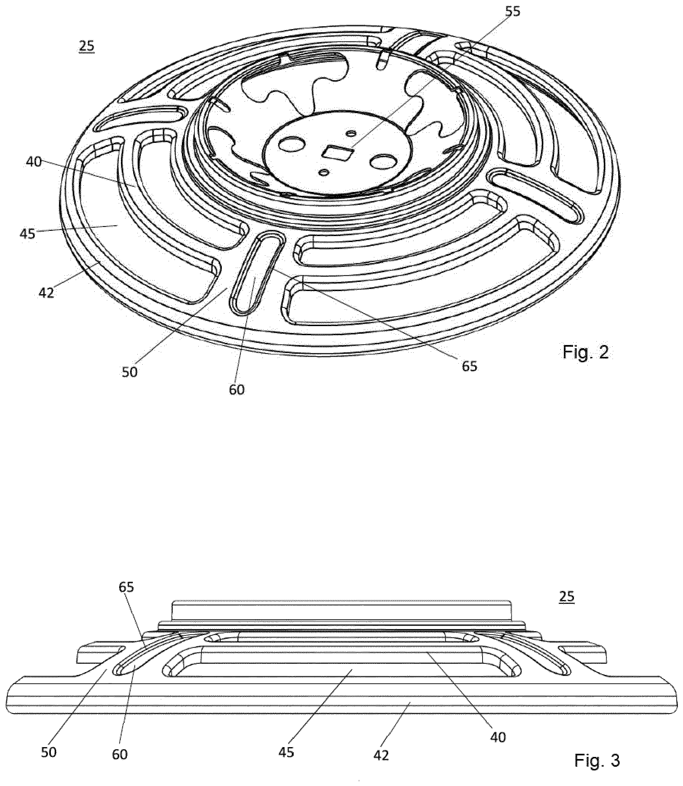

With reference to Figures 2 and 3 an according to an embodiment of the present disclosure, the perch structure 25 is shown in greater detail. In this preferred embodiment, the perch structure 25 is comprised of a plurality of inner and outer perch members 40, 42. As shown, each of the inner perch members 40 are separated from the outer perch members by spacings 45. Adjacent inner perch members 40 as well as adjacent outer perch members 42 are separately by radial members 50. As shown, radial members 50 extend outwardly away from the center 55 of the perch structure 25 and downwardly in a concave manner. In this improved embodiment, the radial members 50 are further comprised of recessed portions 60, also known as punches. In a preferred embodiment, the recessed portions 60 are circular and surrounded by a curved peripheral wall 65. The recessed portions 60 have been shown to increase rigidity of the perch structure 25 and its ability to withstand impact if the bird feeder (not shown) falls to the ground. As best shown in Figure 3, the inner perch member 40 is positioned above and closer to the center 55 of the perch structure 25 than outer perch member 42. This allows birds of various sizes to either perch on inner perch member 40 or outer perch member 42, while providing access to seeds in the seed tray (not shown). As shown, the inner perch members 40 form a generally circular element at a first radius from the center 55 of the perch structure 25, while the outer perch members 42 also form a generally circular element at a second radius from the center 55 of the perch structure 25, whereby the second radius is larger than the first radius. A worker skilled in the art would appreciate that any number of perch members may be formed around the center 55 of the perch structure 25, the perch members having different radii to accommodate various bird sizes. A worker skilled in the art would further appreciate that although four inner perch members 40 and outer perch members 42 are shown, any number of perch members 40, 42 may be used provided that there are at least two of each.

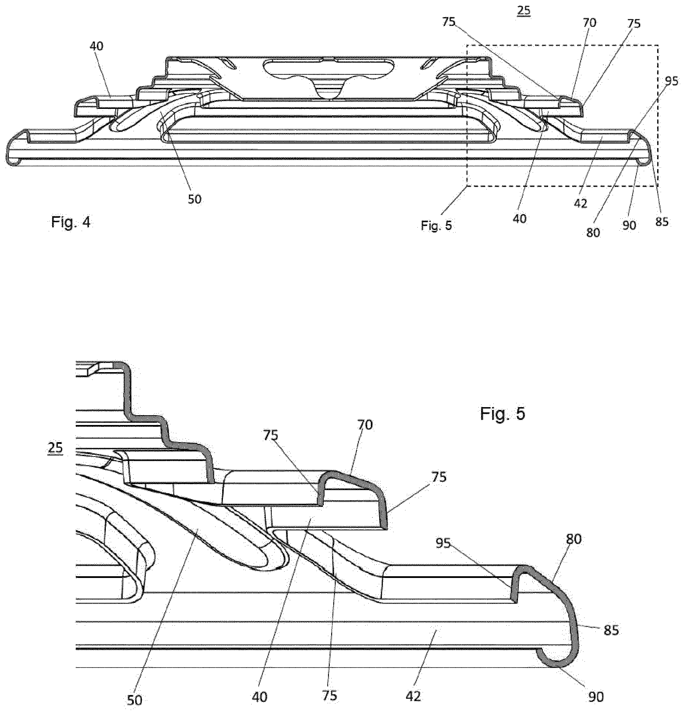

With reference to Figures 4 and 5 and according to an embodiment of the present disclosure, the perch structure 25 is shown cross-sectionally. The inner perch members 40 are shown further comprised of sloping upper wall 70 having curved edges terminating in a pair of sidewalls 75. As shown, the sidewalls 75 extend along the inner perch members 40 and on each side of the radial members 50. The outer perch members 42 are shown further comprised of a sloping upper wall 80 that curves into a curved outer wall 85 having a U-shaped lower wall 90. The sloping upper wall 80 also curves into an inner sidewall 95. In a preferred embodiment, the U-shaped lower wall 90 extends circumferentially around the perch structure 25. The U-shaped lower wall 90 of the outer perch member 42 has been shown to further strengthen the perch structure 25 and its ability to withstand impact if the bird feeder (not shown) falls to the ground. A worker skilled in the art would appreciate that although not shown, the U-shaped lower wall 90 may have a plurality of apertures (not shown) to assist with drainage and clearing of other debris that may accumulate in the U-shaped lower wall 90. The shape of both the inner and outer perch members 40, 42 allows a bird's claws to comfortably grasp onto the perch members 40, 42 at a preferred height relative to the center (not shown) of the perch structure 25.

Many modifications of the embodiments described herein as well as other embodiments may be evident to a person skilled in the art having the benefit of the teachings presented in the foregoing description and associated drawings. It is understood that these modifications and additional embodiments are captured within the scope of the contemplated disclosure which is not to be limited to the specific embodiment disclosed.

## Claims

1. A bird feeder comprising:
a seed tube to receive and store seeds;
a seed tray connected to the seed tube, the seed tray to dispense the seeds; and
a perch structure secured to the seed tray, the perch structure further comprising:
a plurality of perch members; and,
at leastone radial member extending between and connecting adjacent perch members;
wherein at least one of the plurality of perch members has a curved wall to reinforce the at least one perch member.

2. The bird feeder of Claim 1 wherein the at least one radial member is further comprised of a recessed portion to increase the strength of the perch structure.

3. The bird feeder of Claim 1 wherein the plurality of perch members are further comprised of inner and outer perch members.

4. The bird feeder of Claim 3 wherein the inner perch members are further comprised of a sloping upper wall having curved edges terminating in a pair of sidewalls.

5. The bird feeder of Claim 3 wherein the outer perch members are further comprised of:
a sloping upper wall;
a curved outer wall;
a U-shaped lower wall; and,
an inner sidewall,
wherein the U-shaped lower wall increases the rigidity and strength of the perch structure.

6. The bird feeder of Claim 1 wherein at least one of the plurality of perch members has apertures for drainage.

7. The bird feeder of Claim 5 wherein the U-shaped lower wall extends circumferentially around the perch structure.

8. A perch structure for use with a bird feeder comprising:
a plurality of perch members; and,
at least one radial member extending between and connecting adjacent perch members.

9. The perch structure of Claim 8 wherein the at least one radial member is further comprised of a recessed portion to increase the strength of the perch structure.

10. The perch structure of Claim 8 wherein the plurality of perch members are further comprised of inner and outer perch members.

11. The bird feeder of Claim 10 wherein the inner perch members are further comprised of a sloping upper wall having curved edges terminating in a pair of sidewalls.

12. The bird feeder of Claim 10 wherein the outer perch members are further comprised of:
a sloping upper wall;
a curved outer wall;
a U-shaped lower wall; and,
an inner sidewall,
wherein the U-shaped lower wall increases the rigidity and strength of the perch structure.

13. The bird feeder of Claim 8 wherein at least one of the plurality of perch members has apertures for drainage.

14. The bird feeder of Claim 12 wherein the U-shaped lower wall extends circumferentially around the perch structure.
